Europäisches Patentamt

European Patent Office

Office européen des brevets

(11) Publication number: 0 336 102
A2

## EUROPEAN PATENT APPLICATION

(21) Application number: 89103374.8

(22) Date of filing: 27.02.89

(51) Int. Cl.4: H01M 10/16 , H01M 10/28

(30) Priority: 07.03.88 JP 51513/88

(43) Date of publication of application:
11.10.89 Bulletin 89/41

(84) Designated Contracting States:
DE FR GB IT NL

(71) Applicant: HITACHI, LTD.
6, Kanda Surugadai 4-chome Chiyoda-ku
Tokyo(JP)

Applicant: Hitachi Chemical Co., Ltd.
1-1, Nishi-shinjuku 2-chome Shinjuku-ku
Tokyo 160(JP)

(72) Inventor: Imahashi, Jinichi
6-13, Osecho-1-chome
Hitachi-shi(JP)
Inventor: Horiba, Tatsuo
4-3, Daiharacho-3-chome
Hitachi-shi(JP)
Inventor: Takeuchi, Masato
2428-6, Koya
Katsuta-shi(JP)
Inventor: Kamo, Tomoichi
60-7, Minamidai, Tokaimura Naka-gun
Ibaraki-ken(JP)
Inventor: Nishimura, Shigeoki
2577-87, Higashiishikawa
Katsuta-shi(JP)
Inventor: Ogura, Takao
2200, Aza Oka Okabemachi
Osato-gun Saitama-ken(JP)

(74) Representative: Patentanwälte Beetz sen. -
Beetz jun. Timpe - Siegfried -
Schmitt-Fumian- Mayr
Steinsdorfstrasse 10
D-8000 München 22(DE)

(54) Secondary battery.

(57) A secondary battery comprising, in a battery case (5), an electrode group (4) consisting of positive and negative electrodes composed of a substrate (2) and an electrode active material (1) and a separator, an electrolytic solution, and a means (3) for decreasing the contact resistance between the substrates (2) of the positive and negative electrodes and the electrode active material (1) by pressing the electrode group.

FIG. 1

FIG. 2

# SECONDARY BATTERY

## BACKGROUND OF THE INVENTION

### FIELD OF THE INVENTION

This invention relates to a secondary battery of which electrode active material undergoes expansion and shrinkage upon charge and discharge, and particularly to a mechanism and a construction for applying a pressure to the electrode group.

### DESCRIPTION OF THE PRIOR ART

Due to the recent progress in electronics, LSI, IC, etc. have become largely applied to general electrical instruments, with which they are being improved in performance, miniatuarized, and formed into a portable article and cordless article. As the result, the demand of batteries used as their electric power source is also increasing. Though a wide variety of batteries are used for this purpose, secondary battery is predominantly used among the batteries having a movable part and capable of supplying a relatively high electric power. Among the secondary batteries, alkali batteries using an alkaline aqueous solution as the electrolytic solution, such as nickel-cadmium battery and the like, are superior to prior lead-acid battery in lightness in weight, high energy density and resistance to overcharge and overdischarge. For this reason, demand of small-sized sealed type alkali batteries is particularly increasing. With the increase in its demand, nickel-cadmium battery is being requested more and more to achieve a rapid charge and a high capacity from the viewpoint of easiness to use. Regarding the rapid charge, an improvement is being studied mainly by the method of absorbing the oxygen gas generated on the nickel electrode into the cadmium electrode. Regarding the high capacity, the capacity of nickel electrode has to be enhanced because the battery capacity is governed by nickel electrode. Further, the utilization rate of electrode active material is also being actively studied, and various proposals have been made on the method for constructing electrode group from positive electrode, negative electrode and separator for the purpose of improving the utilization rate of active material. The proposals include, for example, a method which comprises forming the electrode into a spiral, coating and fixing it with plural series of adhesive tape, and bringing the proportion of the adhesion area into a specified range to minimize the unevenness in electrode-electrode distance (Japanese Patent Application Kokai (Laid-Open) 60-170171); a method which comprises swelling the separator with the electrolytic solution so as to fill up the gap between negative electrode and separator and to make their contact sufficient (Japenese Patent Application Kokai (Laid-Open) 57-185668); a method which comprises compounding a swelling material into the separator and thereby holding the separator as a swollen gel (Japanese Patent Application Kokai (Laid-Open) 56-63772); a method which comprises dispersing the electrolytic solution into the separator as colloid (Japenese Patent Application Kokai (Laid-Open) 57-152665); etc. Further, a method of compressing a laminated electrode group via a separator composed of a dense layer and a coarse layer in order to prevent falling-off of the active material (Japanese Patent Application Kokai (Laid-Open) 55-91564) can also be referred to.

As a method for producing an electrode from a electron substrate and an active material, the method which comprises impregnating and depositing an active material into a sintered plate substrate prepared by depositing a sintered material of nickel powder on a current collector has been practised hitherto. In the recent years, however, a method which comprises coating a pasty active material onto a porous substrate to prepare an electrode has become adopted. Thus, the falling-off of active material from the substrate has become a more important problem than in the past.

In a paste type lead-acid battery, it has also been proposed to prevent the falling-off of cathodic active material and prolong its lifetime by stacking a spacer (a sort of swelling agent) on the separator placed between electrodes, letting the spacer absorb the electrolytic solution and swell to apply a pressure to the electrode group by the swelling force (Japanese Patent Application Kokai (Laid-Open) 58-133785).

It is considered that the above-mentioned prior techniques will be effective for preventing or minimizing the variations in the electrode-electrode distance and electrode thickness in the wound or stacked structures composed of positive and negative electrodes and separators and for preventing the softening and falling-off of active material due to absorption of electrolytic solution. However, as is mentioned in Japanese patnet Application Kokai (Laid-Open) 60-170171, a method which comprises minimizing the variation in electrode-electrode distance by winding spiral electrodes with an adhesive tape or the like is disadvantageous in that a relaxation of winding pressure occurs in the spiral electrode, so that it is not suitable for flexible electrodes such as pasty electrode, though it may be effectively applicable to elastic sintered electrodes.

If a swelling agent layer is provided in separator or the like, there arises a problem that the separator swells to increase the distance between positive and negative electrodes and thereby increase the internal resistance because the separator is located between the positive and negative electrodes.

On the other hand, it is known that the active material layer of secondary battery absorbs the electrolytic solution to expand its volume and generally brings about a volume change in the charge and discharge reactions. Due to this volume change, the active material layer attached to the substrate is liberated and falls off from the substrate, and further the contact among the particles of active material layer and between the particles and conducting material is deteriorated. As the result, a defect is formed in the substrate and the current collecting network of conducting material, and the efficiency of charge and discharge of active material decreases. As a countermeasure for this problem, Japanese Patent Application Kokai (Laid-Open) 58-133785 proposed a technique which comprised stacking an acidic swelling material (spacer) on the electrode group consisting of positive and negative electrodes and separator and applying a stretching pressure to the electrode group by the swelling force of the swelling material and thereby preventing the falling-off of active material from positive electrode. Since this prior technique was proposed for the purpose of preventing the falling-off of active material by applying a pressure, no consideration was given there to the contact between the interface of current collector and active material and among active material particles nor to the movability of electrolytic solution among active material particles, in order to improve the electrical contact. In other words, the object of this technique are batteries which are difficult to get sufficient physical contact. Further, since the range of stretching pressure is restricted to 0.2-0.3 kgf/cm², it is unsuitable for batteries in which the falling-off of active material must be prevented by applying a higher pressure or batteries in which the contact between current collector and active material must be further improved.

Accordingly, in order to improve the contact between electrode substrate and active material, it is necessary to press the electrode active material layer and thereby decrease the volume change of active material. However, the tape and the like used in prior arts has been disadvantageous in that winding pressure is uneven. Swelling agent used in separator or the like has been disadvantageous in that, since it is made of a water-soluble polymer, it is transformed into a sol when it absorbs electrolytic solution and swells, and therefore it cannot press the electrode group though it can fill the gap between electrodes. Further, separator and the like has been insufficient in pressing force.

From the viewpoint of enhancing the capacity of batteries, pasty type electrode wherein an active material is directly filled on current collector is being developed in the field of alkali batteries such as nickel-cadmium batteries. In pasty type electrodes, a way for lightening the weight of substrate base is being studied for the purpose of enhancing the capacity of battery. However, lightening the weight of electrode substrate means decreasing the space occupied by base in electrode, which leads to a decrease in the contact area electrode, which leads to a decrease in the contact area between substrate and active material and therefore a decrease in the adhesive force of active material to substrate and as its result, an increase in the contact resistance between active material and electrode substrate interface.

SUMMARY OF THE INVENTION

The object of this invention consists in providing a high-capacity secondary battery using a pasty type electrode into which a means for generating an appropriate pressure in the battery is incorporated for the purpose of decreasing the contact resistance between electrode substrate and active material and achieving a high utilization rate of active material.

Thus, this invention provides a secondary battery involving a current collector composed of a positive electrode and a negative electrode, both consisting of an electrode substrate and an electrode active material, and a separator (hereinafter, referred to as "electrode group") and an electrolytic solution in a battery case, wherein a means for applying a pressure to the electrode group to decrease the contact resistance between the substrates of positive and negative electrodes and the electrode active material is provided in the battery case.

BRIEF DESCRIPTION OF THE DRAWINGS

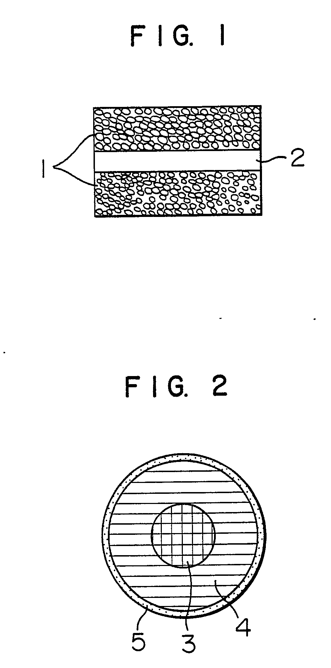

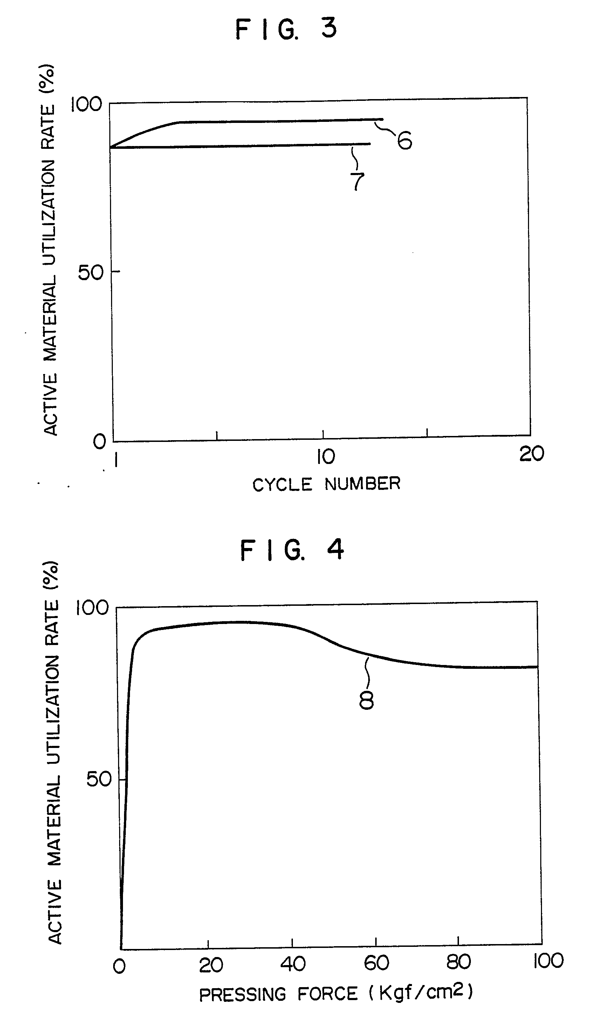

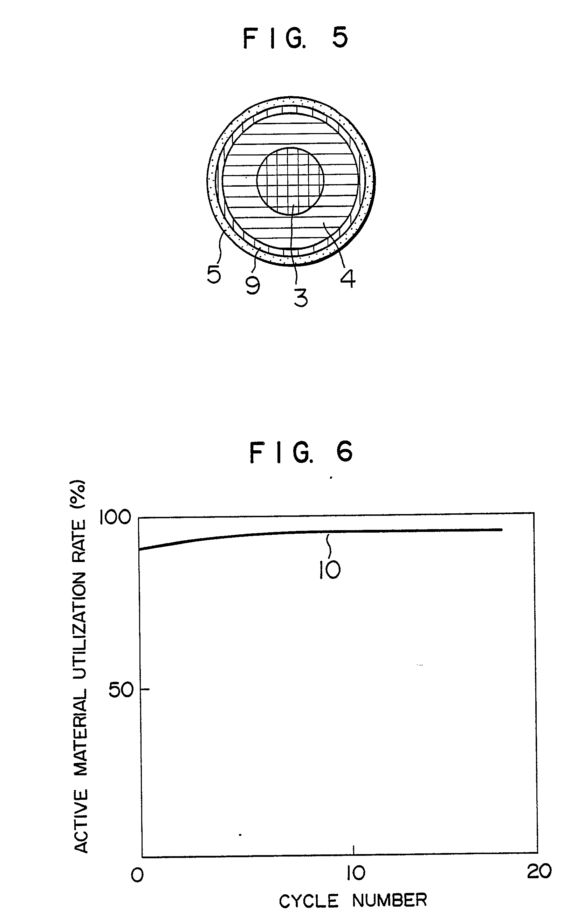

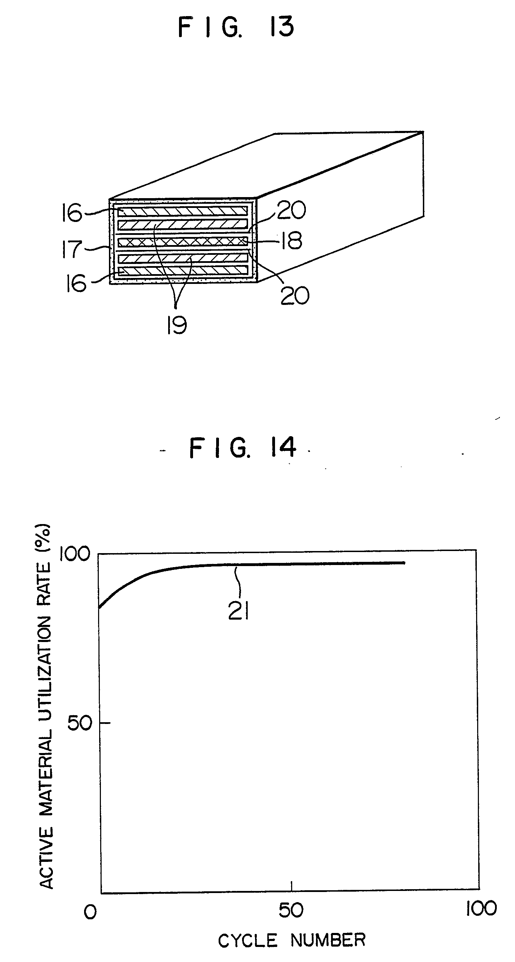

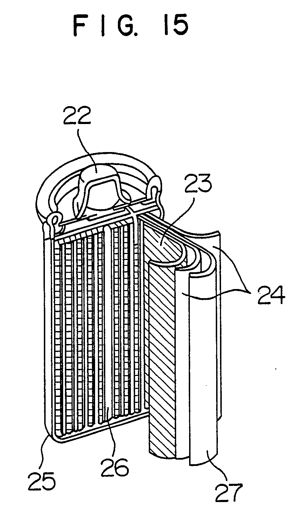

Figure 1 is a schematic illustration of an electrode having a three-layer structure; Figures 2, 5, 7 and 9 are schematic sectional views of the cylindrical battery according to this invention; Figure 3 is a comparison in utilization rate of active material between this invention and prior art; Figure 4 illustrates the relation between pressing force and utilization rate of active material in this invention; Figures 6, 8, 10, 11, 12 and 14 are graphs illustrating the cycle characteristic of active material utilization rate in this invention; Figure 13 is a sectional view illustrating a rectangular battery of this invention; and Figure 15 is a diagram illustrating the general structure of nickel-cadmium battery.

DETAILED DESCRIPTION OF THE INVENTION

According to this invention, an electrode group prepared by spirally winding electrodes and/or an electrode group prepared by stacking platy electrodes is contained in a battery and a substance capable of changing its shape by chemical or physical action (hereinafter referred to as pressing material) is made to coexist on the outer circumference and exterior part of electrode group or on the inner circumferential part of the electrode group, whereby the active material layer and electrode base in the positive electrode, negative electrode and separator are brought into a more intimate contact by the pressing force due to said change in shape, and thereby a high utilization rate of active material can be achieved. Since no pressing substance is provided on the separator placed in the electrode group but the pressing is carried out from the outside, the electrode-electrode distance can be decreased and the resistance between electrodes can be lowered, so that the battery performance can be improved.

Said pressing material means a material taking part in absorption of electrolytic solution, reaction with electrolytic solution or a chemical action such as hydration. Examples of said pressing material include composite materials composed of a water-absorbing polymer such as acrylic acid-vinyl alcohol copolymer, sodium acrylate polymer, modified polyethylene oxide and the like and a strengthening synthetic resin material such as polyvinyl chloride, ethylene-vinyl acetate resin, polyethylene, polypropylene and the like; shape-memory resin compound such as trans-polyisoprene resin and the like; and shape-memory alloys such as Ni-Ti alloy, Ni-Ti-Cu alloy, Ni-Al alloy, In-Tl alloy and the like. However, the pressing material is not limited to the above-mentioned ones, but it may be selected from a wide variety of electrically conductive and non-conductive materials so far as it can expand or contract its volume upon absorption of electrolytic solution or can generate a pressure by the action of heat, vibration, impact and the like, because it has no relation to the electrode reaction.

The pressing material may be placed at any position in relation to the construction of battery, so far as it can apply a pressure onto the electrode surface in the battery and can bring about a more intimate contact into the electrode group by suppressing the volume change of electrode active material at the time of charge and discharge and its volume expansion caused by the absorption of electrolytic solution.

The pressure to be applied according to this invention may be varied arbitrarily depending on the material quality, quantity and structure of the material. According to the working examples mentioned below, the range of pressure exhibiting an effective pressing effect is 1 to 100 kgf/cm$^2$, and more preferably 3 to 40 kgf/cm$^2$. Such a pressing force can be exercised after setting the electrodes in the container, so that it is unnecessary to apply the desired pressure at the time of assembling the battery.

Further, this invention also provides a three-layer structure electrode forming a pasty active material layer on both surfaces of a platy electrode substrate such as wire gauze, expanded metal, perforated sheet and the like.

The electrode substrate plays a role of a current collector and a role of strength maintainer, and an electrode substrate lighter in weight and smaller in thickness is more desirable for enhancing the capacity and decreasing the density of battery. However, if the thickness is too small, strength is insufficient, workability is not good, and current collecting performance is deteriorated. Studies of the inventors have revealed that the practically allowable lower limit of the thickness is 0.02 mm. If thickness of electrode base increases, the volume occupied by the substrate in electrode increases and packing density of active material decreases, although strength of electrode increases. Studies of the inventors have revealed that the practically allowable upper limit of the thickness of electrode substrate, though it may be depending on the thickness of electrode, is 0.6 mm when thickness of electrode is 1 mm or below. Accordingly, in a platy substrate, a thickness of 0.6 to 0.02 mm is suitable practically, and more preferably 0.4 to 0.05 mm.

The electrolytic solution is dropwise introduced into the battery case from upper part of the case after containment of the electrode group into the case.

If a pressing material capable of expanding upon absorption of electrolytic solution is filled in the central and outer circumferential parts of wound electrode group or the upper and under parts of stacked electrode group, the contact with this expanding material generates an expanding pressure, due to which the positive electrode is intimately contacted with the negative electrode via a separator. At this time, the active materials on the positive and negative electrodes are effectively contacted with the electrode substrates, and therefore the conductive network of electrode substrate is effectively utilized, and as its result the charging and discharging efficiency of battery is enhanced. Further, in a secondary battery, active material is oxidized at the time of charge and reduced at the time of discharge on the positive electrode, and the reverse occurs on the negative electrode, which leads to a change in volume without exception. Accordingly, the liberation between the active material layer and electrode substrate must be avoided. Thus, by forcibly pressing the active material layer with a pressing material and lessening the influence of volume change, the contact between active material layer and electrode substrate can be enhanced. Further, by arranging the particles in the active material layer and the conducting agent more densely, the efficiency of charge and discharge can be improved. By these effect, a secondary battery having a high active material utilization rate can be obtained. Further, by intimately contacting positive and negative electrodes intervened by separator, the peeling between respective electrode substrate and active material can be prevented and, at the same time, the rapid charging performance can also be improved.

The drop in contact resistance due to pressing and thereby caused improvement in the utilization rate of active material are particularly remarkable in pasty type high-capacity batteries. That is, in high-capacity electrodes of three-layered structure prepared by forming an active material layer on both sides of a platy substrate such as wire gauze, expanded metal, perforated sheet or the like, the volume occupied by substrate in an electrode is small and the interfacial contact resistance between active material and substrate is high, so that this problem can be solved by applying a pressure to the electrode.

The existence of optimum range in the pressing force is for the following reason. Thus, when the pressure is too low, it is insufficient for lowering the contact resistance between substrate and active material layer. When it is too high, diffusion of the electrolytic solution between active material particles and diffusion of the gas generated in the electrode are insufficient, and deformation of the electrode active material layer takes place. As the result, in the high-capacity pasty type electrode which is the object of this invention, an effective effect can be exhibited in the pressure range of 1 to 100 kgf/cm² and more preferably 3 to 40 kgf/cm². This function is applicable to secondary batteries such as nickel-cadmium battery, lead-acid battery, nickel-iron battery, lithium secondary battery using a nonaqueous electrolytic solution, and the like, and their performances can be greatly improved by it. This indicates that the technique of this invention is widely applicable to secondary batteries in which the volume change of active material layer is unavoidably repeated upon charge and discharge.

DESCRIPTION OF THE PREFERRED EMBODIMENTS

Next, the characteristic feature of this invention will be explained by way of the following working examples.

Example 1

A cylindrical battery of this invention was prepared, and its battery performances were measured. The nickel electrode used in the test was prepared from the following material in the following manner. Thus, 80% by weight of nickel hydroxide (active material), 10% by weight of nickel fiber (conducting material) and 5% by weight of metallic cobalt (activator for active material) were mixed together in the mortar of a kneader. Then, thereto were added 20% by weight of water and 5% by weight of PTFE (binder), and they were kneaded. As the PTFE, a PTFE dispersion (Polyflon Dispersion D-1, manufactured by Daikin Kogyo K. K.) was used. The pasty kneaded mixture thus obtained was applied to both sides of a 60 mesh nickel wire gauze serving as the electrode substrate. It was dried at 80°C and contact-bonded by means of a press to prepare a nickel electrode. Figure 1 is a schematic sectional illustration of the nickel electrode. As shown in Figure 1, it had a three-layer structure composed of active material layer 1 and electrode substrate 2, where the electrode substrate was held between two active material layers. Thickness of the electrode was 0.6 mm, and that of electrode base was 0.2 mm. This electrode base was platy and flexible, and was suitable for wound electrode.

Cadmium electrode was prepared in the following manner.

Thus, 85% by weight of cadmium oxide, 10% by weight of Ni powder (conducting material) and 5% by weight of PTFE dispersion were kneaded with ethylene glycol of 20 wt%· for the total weight of the ingredients shown above in a kneader. The resulting paste was attached to a 40 mesh wire gauze and then dried at 140°C to form an electrode for measurement. Figure 2 is a sectional schematic illustration of a cylindrical battery prepared from them. Pressing material 3 was filled into the central part of the battery. The pressing material was a composite material composed of 50% of a water-absorbing polymer gel constituted of acrylic acid-vinyl alcohol copolymer and 50% of ethylene-vinyl acetate copolymer resin (hereinafter referred to as "mixed compound"), and had a form of cylinder having a length of 40 mm. The diameter of the pressing material was 3 mm. For comparison, a battery having the same structure as above from which the pressing material was excepted was prepared. From the above-mentioned positive and negative electrodes, a spiral electrode 4 was prepared with a separator, and the pressing material was filled into its central part, after which the whole was introduced into battery case 5. Then, an electrolytic solution containing 300 g/liter of potassium hydroxide and 15 g/liter of lithium hydroxide was poured into the case, and the product was charged and discharged at 25° C. After charging it for 15 hours at a charging rate of 0.1C, it was discharged at a discharging rate of 0.2C. The capacity of discharging was determined, taking a battery voltage of 1.0 V as the cut off voltage.

Figure 15 illustrates the general structure of nickel-cadmium battery, wherein 22 is terminal of positive electrode, 23 is nickel electrode, 24 is separator, 25 is exterior can, 26 is gap, and 27 is cadmium electrode. If a pressing material is inserted into the gap part of this battery, Figure 2 is obtained.

The results obtained are shown in Figure 3. In the battery of this invention, the utilization rate 6 of active material was 85% in the first charge-discharge cycle, 90% in the second cycle, and 93% in the third and later cycles, demonstrating a stable battery performance. On the other hand, in the prior battery 7 of Comparative Example 1, the utilization rate was as low as about 85% already in the first cycle.

Thus, it has been revealed that the battery of this invention has a higher charging capacity than the prior batteries such as that of Comparative Example 1.

Example 2

Ten batteries were prepared by filling a pressing material 3 into the central part of the battery so that the pressure of the pressing material could be applied to the electrode group in the range of 0-100 kgf/cm². As the pressing material, the same mixed compound as in Example 1 was used. As Ni and Cd electrodes, those prepared under the same conditions as in Example 1 were used. The result is shown in Figure 4. Utilization rate 8 of the active material was 90% or above, in the range of 3-40 kgf/cm². It was also revealed that the range of 1-100 kgf/cm² is effective for obtaining an active material utilization rate of 80% or above.

Example 3

Figure 5 is a sectional view of the cylindrical battery prepared in this example. Pressing materials 3 and 9 were filled in the central part and circumferential part of the battery, respectively. As pressing material 3, the same one as in Example 1 was used. As the circumferential pressing material 9, the same mixed compound as in Example 1 formed into a thickness of 0.5 mm and a width of 40 mm was used. Ni and Cd electrodes were prepared under the same conditions as in Example 1. The pressure applied to the electrode group was adjusted to 20 kgf/cm². The result is shown in Figure 6. As is apparent from Figure 6, the active material utilization rate of this battery 10 reached a stability at about 96%.

Example 4

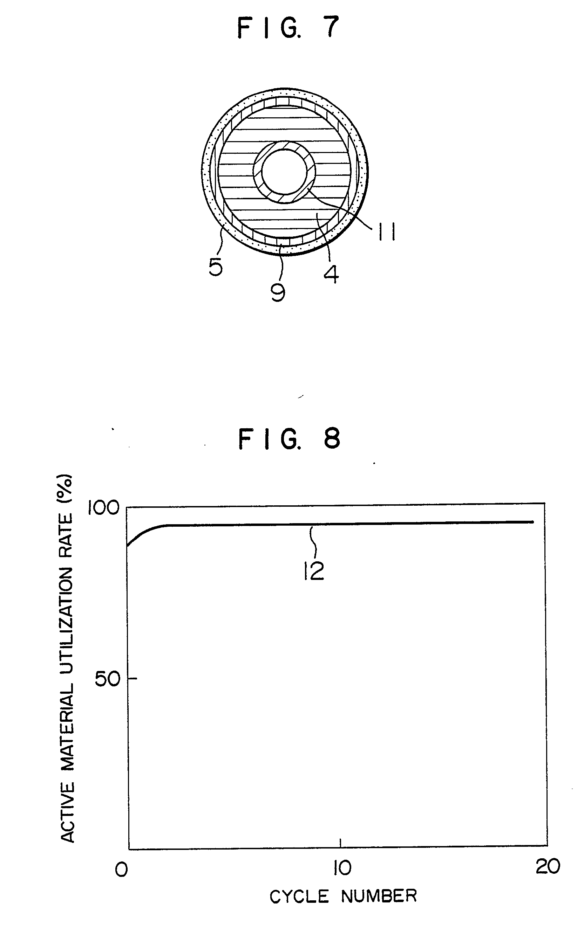

Figure 7 is a schematic illustration of a cylindrical battery wherein a wound core 11 is involved at the central part of an electrode group constituted of a positive electrode, a negative electrode and a separator and a pressing material 9 is provided on the circumferential part of the electrode group. As the wound core, a cylindrical Ni tube having an outer diameter of 3 mm and an inner diameter of 1.5 mm was used. As the pressing material applying a pressure to the electrode group from its circumferential part, the same mixed compound as in Example 1 was used. The mixed compound was a sheet having a thickness of 0.5 mm. Ni and Cd electrodes were prepared under the same conditions as in Example 1. The pressing force applied to the electrode group was adjusted to 30 kg/cm². The result is shown in Figure 8. As shown in Figure 8, the active material utilization rate in the battery 12 of this example reached a stability at about 96%. This indicates the effectiveness of the use of a wound core at the central part of electrode group.

Example 5

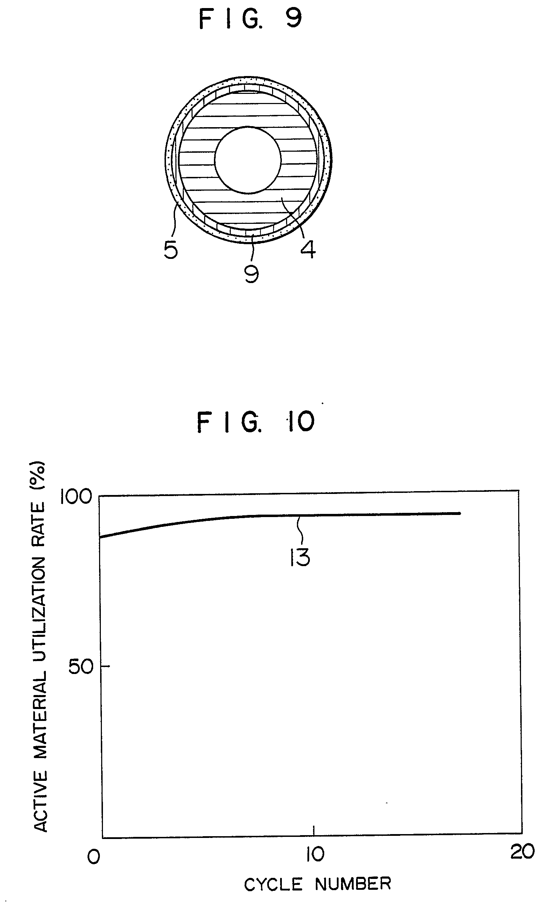

Figure 9 is a sectional schematic illustration of the cylindrical battery prepared in this example. Pressing material 9 was filled into the circumferential part of the battery. As the pressing material, the same mixed compound as in Example 1 was used. The mixed compound had a form of a sheet having a thickness of 1 mm and a width of 40 mm. Ni and Cd electrodes were prepared under the same conditions as in Example 1. The pressure applied to the electrode group was 25 kgf/cm². The result is shown in Figure 10, from which it is apparent the active material utilization rate 13 of this battery reached a stability at about 92%. Thus it was found that filling of a pressing material into the circumferential part of battery is also effective.

Example 6

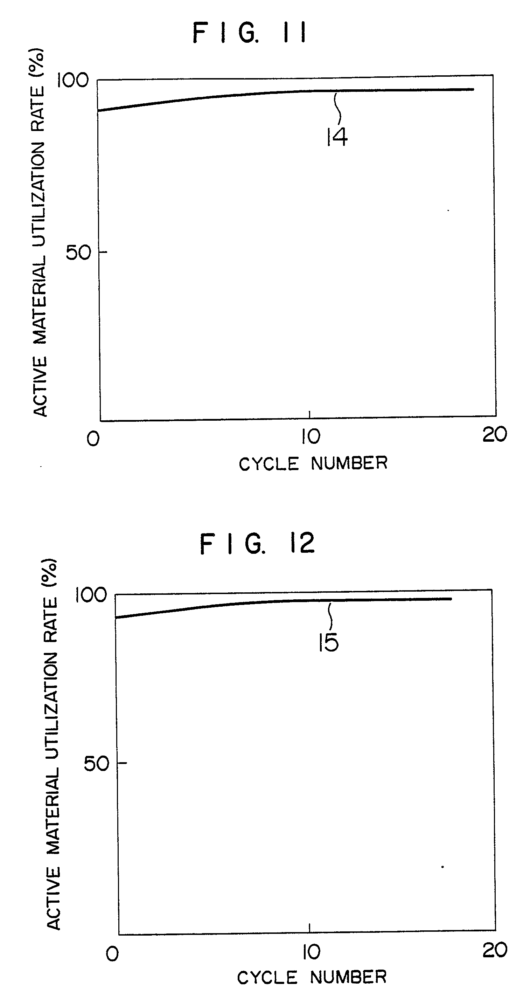

Using a pressing material of which pressure is manifested by the action of heat, this invention was practised. Pressing material 3 was filled under the same conditions as in Example 1. As the pressing material, trans-polyisoprene resin (a shape-memory rubber, manufactured by Kurarey) was used. It had a form of cylinder having a diameter of 3 mm and a length of 40 mm. Ni and Cd electrodes were prepared under the same conditions as in Example 1. The battery prepared in the above-mentioned manner was dipped in a bath kept at 60°C, and the pressure applied to the electrode group was adjusted to 15 kgf/cm². Then, it was cooled and charged and discharged at room temperature. Figure 11 illustrates the active material utilization rate of this battery, from which it is apparent that the active material utilization rate 14 of this battery reached a stability at 95%. As the result, it was found that filling of trans-polyisoprene resin as a pressing material into the central part of battery is also effective.

Example 7

Using a pressing material of which pressure is manifested by the action of heat, this invention was practised. Pressing material 3 was filled under the same conditions as in Example 2. Electrodes were prepared under the same conditions as in Example 1, except that titanium-nickel alloy (Ti 50% - Ni 50%, a shape-memory alloy) was used as the pressing material. The pressing material had a form of a sheet having thickness of 0.1 mm and a width of 40 mm. Using the electrodes thus obtained, a battery was prepared. The battery was placed in a bath kept at 70°C, and its pressing force was adjusted to 10 kgf/cm². Subsequently, the battery was cooled to room temperature, and charged and discharged. The result is shown in Figure 12, from which it is apparent that the active material utilization rate 15 of this battery reached a stability at 94%. As the result, it was found that filling of a shape-memory alloy is also effective.

Example 8

Figure 13 is a schematic illustration of a platy battery prepared in this example. Its construction was as follows. Thus, a positive electrode 18, a negative electrode 19 and a separator 20 were arranged to form a platy electrode group and introduced into battery case 17, and pressing material 16 was placed over and under this electrode group. As the pressing material, the same mixed compound as in Example 1 was used. The other electrodes were prepared under the same conditions as in Example 1. Using these electrodes, a battery was prepared. Pressing force applied to the electrode group was adjusted to 40 kgf/cm². Then, the battery was charged and discharged at room temperature. The result is shown in Figure 14, from which it is apparent that the active material utilization rate 21 of this battery reached a stability at 96%. As the result, it was found that filling of a pressing material into a platy battery is also effective.

Apart from the examples presented above, there may be another method wherein a pressure is generated in the pressing material by the mechanism of fluid pressure.

The electrode substrate used in the three-layer structure electrode had no influence upon active material utilization rate, regardless of material quality and percentage and perforation.

(Effect of the Invention)

According to this invention, the electrode group consisting of a positive electrode, a negative electrode and a separator can be brought into an intimate contact by a pressing force exercised from a pressing material provided in the central part and/or circumferential part of battery or over and under parts of stacked battery, and thereby the contact resistances between the active materials of positive and negative electrodes and electrode substrates, between active material particles, and between active materials and conducting material can be decreased. Accordingly, by effectively utilizing the current collecting network of electrode substrates and the conducting network of conducting material, the effficiency of charge and discharge can be improved and performances of the battery can be improved. As shown in the examples presented above, the effect is particularly exhibited in secondary batteries using a high capacity pasty type electrodes, and particularly remarkably in three-layer structure electrode prepared by forming an active material layer on both sides of a platy electrode substrates such as wire gauze, expanded metal, perforated sheet, and the like.

This invention is effectively applicable not only to nickel-cadmium battery but also other secondary batteries having such a structure as to unavoidably undergo repeated volume change of active material upon charge and discharge, such as nickel-zinc, nickel-iron, nickel-hydrogen and the like. If a pressing material generating a pressing force upon reaction with a non-aqueous solvent is used, this invention is applicable also to nonaqueous solvent type secondary batteries such as lithium type and the like, and thereby the charge-discharge cycle lifetime of lithium secondary battery can be greatly improved. Needless to say, application of pressing machines working by physical actions such as heat, vibration, impact and the like to nonaqueous solvent battery is also effective.

## Claims

1. A secondary battery comprising, in a battery case (25), an electrode group consisting of a separator (24) and positive and negative electrodes (23, 27) composed of an electrode substrate (2) and an electrode active material (1), an electrolytic solution, and a means (3) for decreasing the contact resistance between the substrates (2) of positive and negative electrodes (23, 27) and the electrode active material (1) by pressing the electrode group.

2. A secondary battery according to Claim 1, wherein the pressing force is 1 to 100 kgf/cm$^2$.

3. A secondary battery according to Claim 1, wherein the pressing means (3) is a composite material composed of a water-absorbing polymer which is a substance changing its shape by a chemical or physical means and a synthetic resin, a shape-memory resin compound, or a shape-memory alloy.

4. A secondary battery according to Claim 1, wherein said positive electrode (23) and negative electrode (27) are a nickel electrode and a cadmium electrode, respectively.

5. A secondary battery according to Claim 4, wherein said nickel electrode (27) is formed by contact-bonding, to an electrode substrate (2), a pasty kneaded mixture consisting of an electrode active material (1), a conducting material, an active material activator and a binder.

6. A secondary battery according to Claim 4, wherein said positive and negative electrodes (23, 27) are prepared by attaching a pasty kneaded mixture consisting of an electrode active material (1), a conducting material, an active material activator and a binder to an electrode substrate (2) having a thickness of 0.4 to 0.05 mm, drying it and then contact-bonding it by means of a press.

7. A secondary battery according to Claim 4, wherein said positive and negative electrodes (23, 27) are prepared by attaching a pasty kneaded mixture consisting of an electrode active material (1), a conducting material, an active material activator and a binder onto an electrode substrate (2) having a thickness of 0.4 to 0.05 mm, drying it, and then contact-bonding it by means of a press.

8. A secondary battery comprising, in a battery case (5), an electrode group consisting of a separator and positive and negative electrodes composed of a substrate (2) and an electrode active material (1) and having a shape of a spiral electrode (4) formed by winding the positive and negative electrodes and the separator, an electrolytic solution, and a means (3), placed in the inner circumferential part of the spiral electrode (4), for decreasing the contact resistance between the substrates (2) of positive and negative electrodes and the electrode active material (1) by pressing the electrode group (4).

9. A secondary battery according to Claim 8, wherein said pressing means (3) is a composite material consisting of a water-absorbing polymer and a synthetic resin, a shape-memory resin compound or a shape-memory alloy.

10. A secondary battery according to Claim 8, wherein said positive and negative electrodes are flexible electrodes prepared by contact-bonding a pasty kneaded mixture consisting of an electrode active material (1), a conducting material, an active material activator and a binder to an electrode substrate (2).

11. A secondary battery according to Claim 10, wherein said positive and negative electrodes are electrodes prepared by attaching a pasty kneaded mixture consisting of an electrode active material (1), a conducting material, an active material activator and a binder to an electrode substrate (2) having a thickness of 0.4 to 0.05 mm, drying it, and then contact-bonding it by means of a press.

12. A secondary battery comprising, in a battery case (5), an electrode group consisting of a separator and positive and negative electrodes composed of a base (2) and an electrode active material (1) and having a shape of a spiral electrode (4) prepared by winding the positive electrode, the negative electrode and the separator, an electrolytic solution, and a means (3, 9), placed in both inner and outer circumferential parts of the spiral electrode (4), for decreasing the contact resistance between the substrates (2) of positive and negative electrodes and the electrode active material (1) by pressing the electrode group (4).

13. A secondary battery according to Claim 12, wherein said pressing means (3, 9) is a composite material consisting of a water-absorbing polymer and a synthetic resin.

14. A secondary battery according to Claim 12, wherein said positive and negative electrodes are flexible electrodes prepared by contact-bonding a pasty kneaded mixture consisting of an electrode active material (1), a conducting material, an active material activator and a binder onto the electrode substrate (2).

15. A secondary battery according to Claim 14, wherein said positive and negative electrodes are electrodes prepared by attaching a pasty kneaded mixture consisting of an electrode active material (1), a conducting material, an active material activator and a binder to an electrode substrate (2) having a thickness of 0.4 to 0.05, drying it, and then contact-bonding it by means of a press.

16. A secondary battery comprising, in a battery case (5), an electrode group consisting of a separator and positive and negative electrodes composed of a substrate (2) and an electrode active material (1) and having a shape of a spiral electrode (4) prepared by winding the positive electrode, the negative electrode and the separator, an electrolytic solution, and a means (9), placed in the outer circumferential part of the spiral electrode (4), for de creasing the contact resistance between the substrates (2) of positive and negative electrodes and the electrode active material (1) by pressing the electrode group.

17. A secondary battery according to Claim 16, wherein the pressing means (9) is a composite material consisting of a water-absorbing polymer and a synthetic resin.

18. A secondary battery according to Claim 16, wherein said positive and negative electrodes are flexible electrodes prepared by contact-bonding a pasty kneaded mixture consisting of an electrode active material (1), a conducting material, an active material activator and a binder onto an electrode substrate (2).

19. A secondary battery according to Claim 18, wherein said positive and negative electrodes are electrodes prepared by attaching a pasty kneaded mixture consisting of an electrode active material (1), a conducting material, an active material activator and a binder onto an electrode substrate (2) having a thickness of 0.4 to 0.05 mm, drying it, and then contact-bonding it by means of a press.

20. A secondary battery comprising, in a battery case (5), an electrode group consisting of a separator and positive and negative electrodes composed of a substrate (2) and an electrode active material (1) and having a shape of spiral electrode (4) prepared by winding the positive and negative electrodes and the separator, an electrolytic solution, a means (9), placed in the outer circumferential part of the spiral electrode (4), and a wound core (11) placed in the central part of the spiral electrode (4) for decreasing the contact resistance between the substrates (2) of the positive and negative electrodes and the electrode active material (1) by pressing the electrode group (4).

21. A secondary battery according to Claim 20, wherein said pressing means (9) is a composite material consisting of a water-absorbing polymer and a synthetic resin.

22. A secondary battery according to Claim 20, wherein said positive and negative electrodes are flexible electrodes prepared by contact-bonding a pasty kneaded mixture consisting of an electrode active material (1), a conducting material, an active material activator and a binder onto the electrode substrate (2).

23. A secondary battery according to Claim 22, wherein said positive and negative electrodes are electrodes prepared by attaching a pasty kneaded mixture consisting of an electrode active material (1), a conducting material, an active material activator and a binder onto an electrode substrate (2) having a thickness of 0.4 to 0.05 mm, drying it, and then contact-bonding it by means of a press.

24. A secondary battery comprising, in a battery case (17), an electrode group consisting of a separator (20) and positive and negative electrodes (18, 19) composed of a substrate (2) and an electrode active material (1) and having a shape of a stacked electrode prepared by stacking a plurality of platy unit electrodes consisting of a positive electrode (18), a negative electrode (19) and a separator (20), an electrolytic solution, and a means (16), placed on the both terminals of the stacked electrodes (18, 19) for decreasing the contact resistance between the substrates (2) of the positive and negative electrodes (18, 19) and the electrode active material (1) by pressing the electrode group (18, 19, 20).

25. A secondary battery according to Claim 24, wherein said pressing means (16) is a composite material consisting of water-absorbing polymer and a synthetic resin.

# F I G. 1

# F I G. 2

# F I G. 3

Y-axis: ACTIVE MATERIAL UTILIZATION RATE (%)
X-axis: CYCLE NUMBER

# F I G. 4

Y-axis: ACTIVE MATERIAL UTILIZATION RATE (%)
X-axis: PRESSING FORCE ( Kgf/cm2 )

FIG. 5

5  9  3  4

FIG. 6

# F I G. 7

# F I G. 8

# FIG. 9

# FIG. 10

# F I G. 11

# F I G. 12

# F I G. 13

# F I G. 14

# F I G. 15